# EUROPEAN PATENT APPLICATION

(11) **EP 3 932 754 A1**
(43) Date of publication of application: **05.01.2022**
(21) Application number: 19916578.8
(22) Date of filing: 26.02.2019
(51) Int. Cl.: B60R 25/24, B60R 25/34, B60R 25/10, H04L 9/32

(54) **DEVICE AND SYSTEM FOR CONTROLLING SMARTKEY SIGNAL FOR CAR SHARING VEHICLE**

(30) Priority: 25.02.2019 KR 20190021719
(71) Applicant: Digiparts, Inc., Yongin-si, Gyeonggi-do 16950 (KR)
(72) Inventor: JUNG, Sung Ill, Yongin-si Gyeonggi-do 16876 (KR); WOO, Hyuk Joon, Yongin-si Gyeonggi-do 16923 (KR)
(74) Representative: Viering, Jentschura & Partner mbB Patent- und Rechtsanwälte
(86) International application number: PCT/KR2019/002301
(87) International publication number: WO 2020/175717

(57) **Abstract**

According to the present invention, a device and a system for controlling smartkey signal for a car sharing vehicle may comprise: a car sharing main system which is located inside vehicle, and generates and transmits/receives a command signal necessary for car sharing user authentication and car sharing operations; a vehicle smartkey signal control device for actively controlling a low frequency(LF) signal corresponding to an internal signal of the vehicle in accordance with a user authentication result in the car sharing main system; and a smarkkey for performing normal vehicle key operation or an abnormal vehicle key operation according to a signal of the vehicle smartkey signal control device.

## Description

### BACKGROUND

### 1. Technical Field

The present invention relates to a device and system for controlling a smart key signal for a car sharing vehicle, and more particularly, a smart key control device and system for the car sharing vehicle in which communication between a vehicle and a smart key is allowed only to an authorized user by controlling communication for recognizing the smart key in the car-sharing vehicle.

### 2. Discussion of the Related Art

Recently, a car-sharing service, in which a car is shared by unspecified number of people, is spreading rapidly, and the number of car-sharing users and target vehicles are also rapidly increasing.

Car-sharing is a kind of rental car service in which an unspecified number of people rent car for the required amount of time. From the user's point of view, the biggest difference from a normal rental car is that, without having to face the vehicle owner or car sharing service provider, the vehicle to be used is reserved using smart phone application, and the vehicle door is opened and started the vehicle operation with a smart phone application without a vehicle key.

Due to the characteristics of car sharing service as described above, it is impossible to exchange smart keys because many unspecified users use the vehicle without confronting the service provider. Also, to control the vehicle door with the smart phone, a door lock, a horn, and light, etc. are equipped with a vehicle control device for remote control, and the smart key for the vehicle is usually stored in the vehicle.

However, in general, the vehicle to which the smart key is applied always broadcast radio wave of 25 kHz to determine a location of the smart key, and the smart key that receives the radio wave receives the radio wave in the RFID method. The smart key operates by transmitting Radio Frequency (RF) of 300∼433MHz to the vehicle to notify its presence.

Due to the status that the smart key is stored the vehicle, when the user finishes using the vehicle in the car-sharing service and try to lock the vehicle door with the smart phone application, the vehicle door cannot be locked because the smart key is stored inside of the vehicle.

In addition, if the smart key is placed inside the vehicle, the battery of the smart key is easily discharged due to the continuous communication between the vehicle and the smart key, and the risk of vehicle theft is high.

Therefore, it can be said that there is a need for a device and method to solve these problems.

Therefore, as the present invention has been devised to solve the above problems, an object of the present invention is to provide the smart key control device and system for the car sharing vehicle to unlock the vehicle door only to the authorized user of the car sharing service to control the communication signal for recognizing the smart key in the car sharing vehicle.

### SUMMARY

According to an aspect of the present invention, there is provided a device and system for controlling a smart key signal for car sharing vehicle (1) comprising: a car sharing main system (10) located inside the vehicle and generating and transmitting/receiving a command signal required for car sharing user authentication and car sharing operation; a vehicle smart key signal control device (20) for actively controlling the LF signal which corresponds to the internal signal of the vehicle according to the user authentication result in the car sharing main system (10); and a smart key (30) for performing a normal vehicle key operation or an abnormal vehicle key operation according to a signal from the vehicle smart key signal control device.

In an embodiment of the present disclosure, wherein the vehicle smart key signal control device(20) include a low frequency (LF) antenna (21) usable in a band below 1.0MHz, a circuit unit(23) for processing the RFID signal received from the LF antenna(21), and a control unit (25) for controlling the LF antenna (21) and the circuit unit(23), wherein the circuit unit(23) includes an RFID tuner(23-1) for scanning the signal received from the LF antenna(21), and a demodulator(23-3) for demodulating the signal scanned by the RFID tuner(23-1), an oscillator(23-5) for oscillating the demodulated signal when the demodulated signal is a signal for operating the smart key(30).

In an embodiment of the present disclosure, the control unit (25) determines whether the signal received from the LF antenna (21) is the RFID signal for driving the smart key (30) through the RFID tuner (23-1) and the RFID demodulator (23-3) of the circuit unit (23), and the oscillator of the circuit unit(23) is oscillated for 10 to 400 ms so that the demodulated signal is delayed for a predetermined time.

In an embodiment of the present disclosure, wherein while the oscillator (23-5) is operating, the RFID tuner (23-1) and the RFID demodulator (23-3) are turned off.

In an embodiment of the present disclosure, the smart key (30) is not able to recognize a normal RFID signal for driving the smart key (30) due to a signal oscillated and delayed for the predetermined time while the oscillator (23-5) is operating.

According to an aspect of the present invention, there is provided a method of the device and system for controlling a smart key signal for car sharing vehicle. In a device and system for controlling a smart key signal for car sharing vehicle (1) includes a car sharing main system(10) located inside the vehicle and generating and transmitting/receiving a command signal required for car sharing user authentication and car sharing operation, a vehicle smart key signal control device for actively controlling the LF signal which corresponds to the internal signal of the vehicle according to the user authentication result in the car sharing main system(10), and a smart key for performing a normal vehicle key operation or an abnormal vehicle key operation according to a signal from the vehicle smart key signal control device(20), the method of the device and system for controlling a smart key signal for car sharing vehicle comprising: a vehicle LF transmitter periodically broadcasting a signal for checking vehicle information; the car sharing main system(10) authenticating whether the user is an authorized user or not with respect to the user who intends to use the car sharing vehicle in accordance with the signal of the LF transmitter of the vehicle; as a result of the user authentication, if the authorized user is an authorized user, the LF signal for operating the smart key being transmitted through the car sharing main system (10);as a result of the user authentication, if the user is an unauthorized user, the LF transmitter of the vehicle returning to the regular mode in which a signal for checking vehicle information is periodically broadcasted again; in the case of the authorized user, a signal from the LF antenna (21) of the vehicle smart key signal control device being received and the RFID tuner (23-1) and the demodulator(23-3) of the circuit unit (25) performing demodulation when the LF signal for driving the smart key (30) is transmitted through the car sharing main system (10); the oscillator (23-5) of the circuit unit oscillating for 10 to 400 ms to delay the signal for a predetermined time when the demodulated signal is interpreted as an RFID signal for operating the smart key; checking whether the RF signal corresponding to the response signal of the smart key (30) is not radiated due to the oscillated signal; an operation of the smart key signal control device being stopped if the RF signal is not radiated after checking step; and if the RF signal corresponding to the response signal of the smart key (30) is radiated after the checking step, as repeating follow steps that the signal is received from the LF antenna (21) of the vehicle smart key signal control device (20), demodulation being performed in the circuit unit (23), and the oscillator(23-5) of the circuit unit (23) oscillating for 10 to 400ms to delay the signal for a predetermined time.

In an embodiment of the present disclosure, while the oscillator (23-5) is operating, the RFID tuner (23-1) and the RFID demodulator (23-3) are turned off.

In an embodiment of the present disclosure, the smart key (30) does not recognize the RFID signal for operating the smart key (30) due to the signal oscillated and delayed for the predetermined time.

The effect of the invention is that even if the smart key is located in the vehicle, the vehicle control is possible without changing the in-vehicle control system.

That is, in the case of an unauthorized car sharing user, the door lock is not released when the smart key is stored inside, and in case of an authorized car sharing user, the door lock can be released normally.

However, the effects of the present invention may not be limited to the above effects, and may be variously expanded without departing from the sprit and scope of the present invention.

### BRIEF DESCRIPTION OF THE DRAWINGS

FIG. 1 is a conceptual diagram for explaining a smart key driving control of a vehicle.
FIG. 2 is a schematic configuration diagram of a smart key device and system for controlling a smart key signal for car sharing vehicle according to an embodiment of the present invention.
FIG. 3 is an internal configuration diagram of the smart key control device of the smart key control device and system for controlling the smart key signal for car sharing vehicle.
FIG. 4 is a flowchart of a control method of the smart key signal control device and system for the car sharing vehicle.

### DETAILED DESCRIPTION OF THE EMBODIMENTS

Hereinafter, preferred embodiments of the present invention will be described in more detail with reference to the drawings.

Since the present invention can have various changes and can have various forms, specific embodiments are illustrated in the drawings and described in detail in the specification. However, this is not intended to limit the present invention to the specific disclosed form, it should be understood to include all modifications, equivalents and substitutes included in the spirit and scope of the present invention.

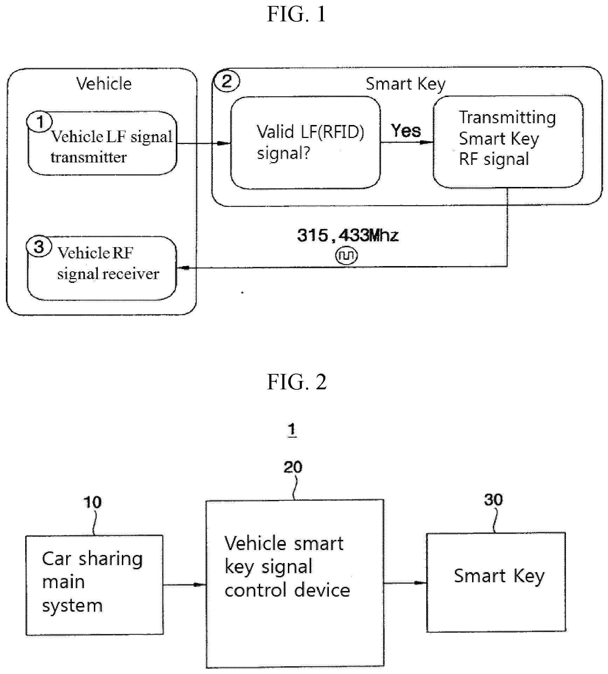

FIG. 1 is a conceptual diagram for explaining a smart key driving control of a vehicle.
① A Low Frequency(LF) of 20kHz, 25kHz or 134.2 kHz signal (corresponding to RFID) from the vehicle LF signal transmitter is transmitted to the smart key to check whether the smart key is located in the vehicle.
② At the time, when the smart key is located in the vehicle and a valid LF signal is received from the vehicle's LF signal transmitter, a Radio Frequency (RF) of 315 MHz or 433 MHz signal from the smart key is outputted in response.
③ By receiving the RF signal of 315MHz or 433 MHz from the vehicle RF signal receiver, the vehicle recognizes that the smart key is located in the vehicle.

In this way, when the smart key of the car sharing vehicle is located in the vehicle, the vehicle door cannot be unlocked or locked from the outside.

FIG. 2 is a schematic configuration diagram of a smart key signal control device and system 1 for the car sharing vehicle according to an embodiment of the present invention.

Referring to FIG.2, the smart key signal control device and system 1 for the car sharing according to an embodiment of the present invention may be comprised to a car sharing main system 10, a vehicle smart key signal control device 20 and a smart key 30.

The car sharing main system 10 may be located inside the vehicle and serve to generate and transmit/receive a command signal required for car sharing user authentication and car sharing operation.

The vehicle smart key signal control device 20 may actively control the LF signal which corresponds to the internal signal of the vehicle according to the user authentication result in the car sharing main system 10 and confirms the location of the smart key.

The smart key 30 may perform a normal vehicle key operation or an abnormal vehicle key operation according to a signal from the vehicle smart key signal control device 20.

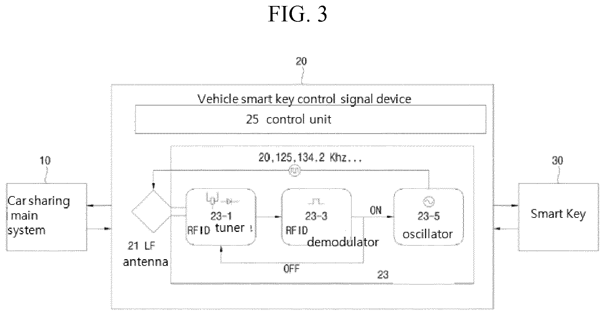

FIG. 3 is an internal configuration diagram of the smart key control device 20 of the smart key control device and system 1 for controlling the smart key signal for car sharing vehicle.

The vehicle smart key signal control device may include a low frequency (LF) antenna 21 usable in a band below 1.0MHz, a circuit unit 23 for processing the RFID signal received from the LF antenna, and a control unit 25 for controlling the LF antenna and the circuit unit.

The circuit unit 23 may include an RFID tuner 23-1 that scans the signal received from the LF antenna 21, and an RFID demodulator 23-3 that demodulates the signal scanned by the RFID tuner 23-1, an oscillator 23-5 for oscillating the demodulated signal when the demodulated signal is a signal for operating the smart key.

The control unit 25 may determine whether the signal received from the LF Antenna 21 is the RFID signal for driving the Smart Key 30 through the RFID tuner 23-1 and the RFID demodulator 23-3 of the circuit unit.

As a result of the determination, if it is the RFID signal for driving the smart key 30, the oscillator 23-5 of the circuit unit 23 may be oscillated for 10 to 400 ms so that the demodulated signal is delayed for a predetermined time.

While the oscillator 23-5 is operating, the RFID tuner 23-1 and the RFID demodulator 23-3 may be tuned off.

The smart key 30 may not be able to recognize a normal RFID signal for driving the smart key 30 due to a signal oscillated and delayed for the predetermined time while the oscillator 23-5 is operating.

Due to this, it is not possible to radiate an RF signal that can be a response of the smart key to the LF signal of the vehicle and thereby the smart key 30 located in the vehicle cannot be recognized.

A control method of the car sharing vehicle smart key signal control device and system 1 according to an embodiment of the present invention may be comprised to a car sharing main system 10 located inside the vehicle and serve to generate and transmit/receive a command signal required for car sharing user authentication and car sharing operation, a vehicle smart key signal control device 20 for controlling actively the LF signal which corresponds to the internal signal of the vehicle according to the user authentication result in the car sharing main system 10 and confirming the location of the smart key, and the smart key 30 for performing a normal vehicle key operation or an abnormal vehicle key operation according to a signal from the vehicle smart key signal control device 20.

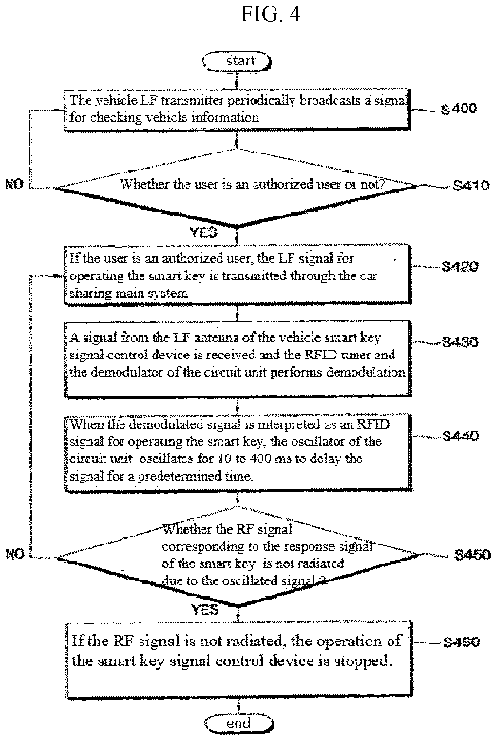

FIG. 4 is a flowchart of a control method of the smart key signal control device and system for the car sharing vehicle.

The vehicle LF transmitter may periodically broadcast a signal for checking vehicle information (S400).

In accordance with the signal of the LF transmitter of the vehicle, the car sharing main system 10 may authenticate whether the user is an authorized user or not with respect to the user who intends to use the car sharing vehicle (S410).

As a result of the user authentication, if the user is an authorized user, the LF signal for operating the smart key may be transmitted through the car sharing main system 10 (S420).

As a result of the user authentication, if the user is an unauthorized user, the vehicle LF transmitter may return to the regular mode in which a signal for checking vehicle information is periodically broadcasted.

As a result of the user authentication, if the user is an unauthorized user, the LF transmitter of the vehicle returns to the regular mode in which a signal for checking vehicle information is periodically broadcasted again.

In the case of the authorized user, when the LF signal for driving the smart key is transmitted through the car sharing main system 10, a signal from the LF antenna 21 of the vehicle smart key signal control device may be received and the RFID tuner 23-1 and the demodulator 23-3 of the circuit unit 23may perform demodulation (S430).

When the demodulated signal is interpreted as an RFID signal for operating the smart key 30, the oscillator 23-5 of the circuit unit may oscillate for 10 to 400 ms to delay the signal for a predetermined time (S440).

It is checked whether the RF signal corresponding to the response signal of the smart key 30 is not radiated due to the oscillated signal (S450).

This is because the smart key cannot recognize the RFID signal for operating the smart key 30 due to the signal oscillated and delayed for the predetermined time.

If the RF signal is not radiated after the confirmation about the checking step, the operation of the smart key signal control device 20 may be stopped (S460).

If the RF signal corresponding to the response signal of the smart key is radiated after the checking step (S450), as repeating follow steps that the signal is received from the LF antenna 21 of the vehicle smart key signal control device 20, demodulation is performed in the circuit unit 23, and the oscillator 23-5 of the circuit unit oscillates for 10 to 400ms to delay the signal for a predetermined time (S420 ∼ S450)

While the oscillator 3-5 is operating, the RFID tuner 2-1 and the RFID demodulator 23-3 may be turned off.

By the control method, it is impossible to radiate the RF signal that can be the response of the smart key to the LF signal of the vehicle, and thus the vehicle cannot recognize the smart key located in the vehicle.

Due to the present invention, even if the smart key is located in the vehicle, it is possible to control the vehicle without changing the in-vehicle control system.

That is, in the case of an unauthorized car-sharing user, the door lock is not released even when the smart key is stored inside the vehicle, and in the case of an authorized car-sharing user, the door lock can be released normally.

As described above, the present invention has been described with respect to particularly preferred embodiments. However, the present invention is not limited to the above embodiments, and it is possible for one who has an ordinary skill in the art to make various modifications and variations, without departing off the spirit of the present invention.
10: car sharing main system
20: vehicle smart key signal control device
30: smart key
21: LF antenna 23: circuit unit 25: control unit
23-1: RFID tuner 23-3 RFID demodulator 23-5: oscillator

## Claims

1. A device and system for controlling a smart key signal for car sharing vehicle (1) comprising:
a car sharing main system (10) located inside the vehicle and generating and transmitting/receiving a command signal required for car sharing user authentication and car sharing operation;
a vehicle smart key signal control device (20) for actively controlling the LF signal which corresponds to the internal signal of the vehicle according to the user authentication result in the car sharing main system (10); and
a smart key (30) for performing a normal vehicle key operation or an abnormal vehicle key operation according to a signal from the vehicle smart key signal control device.

2. The device and system for controlling a smart key signal for car sharing vehicle (1) of claim 1, wherein the vehicle smart key signal control device(20) include a low frequency (LF) antenna (21) usable in a band below 1.0MHz, a circuit unit(23) for processing the RFID signal received from the LF antenna(21), and a control unit (25) for controlling the LF antenna (21) and the circuit unit(23), wherein the circuit unit(23) includes an RFID tuner(23-1) for scanning the signal received from the LF antenna(21), and a demodulator(23-3) for demodulating the signal scanned by the RFID tuner(23-1), an oscillator(23-5) for oscillating the demodulated signal when the demodulated signal is a signal for operating the smart key(30).

3. The device and system for controlling a smart key signal for car sharing vehicle of claim 2, the control unit (25) determines whether the signal received from the LF antenna (21) is the RFID signal for driving the smart key (30) through the RFID tuner (23-1) and the RFID demodulator (23-3) of the circuit unit (23), and the oscillator of the circuit unit(23) is oscillated for 10 to 400 ms so that the demodulated signal is delayed for a predetermined time.

4. The device and system for controlling a smart key signal for car sharing vehicle of claim 3, wherein while the oscillator (23-5) is operating, the RFID tuner (23-1) and the RFID demodulator (23-3) are turned off.

5. The device and system for controlling a smart key signal for car sharing vehicle of claim 3, the smart key (30) is not able to recognize a normal RFID signal for driving the smart key (30) due to a signal oscillated and delayed for the predetermined time while the oscillator (23-5) is operating.

6. In a device and system for controlling a smart key signal for car sharing vehicle (1) includes a car sharing main system(10) located inside the vehicle and generating and transmitting/receiving a command signal required for car sharing user authentication and car sharing operation, a vehicle smart key signal control device for actively controlling the LF signal which corresponds to the internal signal of the vehicle according to the user authentication result in the car sharing main system(10), and a smart key for performing a normal vehicle key operation or an abnormal vehicle key operation according to a signal from the vehicle smart key signal control device(20), a method of the device and system for controlling a smart key signal for car sharing vehicle comprising:
a vehicle LF transmitter periodically broadcasting a signal for checking vehicle information;
the car sharing main system(10) authenticating whether a user is an authorized user or not with respect to the user who intends to use the car sharing vehicle in accordance with the signal of the LF transmitter of the vehicle;
as a result of the user authentication, if the authorized user is an authorized user, the LF signal for operating the smart key being transmitted through the car sharing main system (10);
as a result of the user authentication, if the user is an unauthorized user, the LF transmitter of the vehicle returning to the regular mode in which a signal for checking vehicle information is periodically broadcasted again;
in the case of the authorized user, a signal from the LF antenna (21) of the vehicle smart key signal control device being received and the RFID tuner (23-1) and the demodulator(23-3) of the circuit unit (25) performing demodulation when the LF signal for driving the smart key (30) is transmitted through the car sharing main system (10);
a oscillator (23-5) of the circuit unit oscillating for 10 to 400 ms to delay the signal for a predetermined time when the demodulated signal is interpreted as an RFID signal for operating the smart key;
checking whether the RF signal corresponding to the response signal of the smart key (30) is not radiated due to the oscillated signal;
an operation of the smart key signal control device being stopped if the RF signal is not radiated after checking step; and
if the RF signal corresponding to the response signal of the smart key (30) is radiated after the checking step, as repeating follow steps that the signal is received from the LF antenna (21) of the vehicle smart key signal control device (20), demodulation being performed in the circuit unit (23), and the oscillator (23-5) of the circuit unit (23) oscillating for 10 to 400ms to delay the signal for a predetermined time.

7. The method of the device and system for controlling a smart key signal for car sharing vehicle of claim 6, while the oscillator (23-5) is operating, the RFID tuner (23-1) and the RFID demodulator (23-3) are turned off.

8. The method of the device and system for controlling a smart key signal for car sharing vehicle of claim 6, the smart key (30) does not recognize the RFID signal for operating the smart key (30) due to the signal oscillated and delayed for the predetermined time.
